# EUROPÄISCHE PATENTSCHRIFT

(11) **EP 1 419 115 B1**
(45) Veröffentlichungstag und Bekanntmachung des Hinweises auf die Patenterteilung: **22.11.2006**
(21) Anmeldenummer: 02767108.0
(22) Anmeldetag: 14.08.2002
(51) Int. Cl.: C03B 7/00, C03B 9/41

(54) **EINRICHTUNG UND VERFAHREN ZUR REGELUNG UND/ODER STEUERUNG EINER GLASFORMMASCHINE**
DEVICE AND METHOD FOR REGULATING AND/OR CONTROLLING A GLASS-FORMING MACHINE
DISPOSITIF ET PROCEDE DE REGLAGE ET/OU DE COMMANDE D'UNE MACHINE DE FA ONNAGE DE VERRES

(30) Priorität: 14.08.2001 DE 10139808
(43) Veröffentlichungstag der Anmeldung: 19.05.2004
(73) Patentinhaber: SIEMENS AKTIENGESELLSCHAFT, 80333 München (DE)
(72) Erfinder: BURGSTAHLER, Ralph, 91056 Erlangen (DE); SCHULTHEISS, Roland, 91056 Erlangen (DE)
(86) Internationale Anmeldenummer: PCT/DE2002/003016
(87) Internationale Veröffentlichungsnummer: WO 2003/016228

(56) Entgegenhaltungen:
- EP-A- 0 668 248
- EP-A- 0 873 975
- EP-A- 0 879 795
- US-A- 5 271 756
- US-A- 5 812 392

## Beschreibung

Die Erfindung bezieht sich auf eine Einrichtung und ein Verfahren zur Regelung und/oder Steuerung einer Glasformungsmaschine.

Aus der US 5,812,392 ist ein Beispiel für eine derartige Glasformungsmaschine bekannt.

Eine Glasformmaschine übernimmt die automatisierte Formung von Glasbehältern während der Glasherstellung. Eine Ausbildung einer Glasformungsmaschine ist die Individual Section Maschine (IS-Maschine). Die IS-Maschine weist beispielsweise folgende Bereiche auf:
- einen Tropfenspeiser - im englischen Feeder genannt - mit einem Stößel - im englischen Plunger genannt -
- eine Schere, im englischen shear genannt,
- einen Tropfenverteiler und
- individuelle Sektionen, im englischen Individual Sections genannt, zur Auformung von Glas.

Der Tropfenspeiser und/oder die Schere können auch einer Speiseeinheit für die IS-Maschine zugerechnet werden.

Die Ansteuerung der Schere bzw. die Synchronisation mit dem Tropfenspeiser-, bzw. dem Tropfenverteiler erfolgt über eine Regelung und/oder Steuerung. Die Regelung und/oder Steuerung der Sektionen der IS-Maschine erfolgt über eine von der Speiseeinheit separaten Steuerung und/oder Regelung. Die Steuerung und/oder Regelung der IS-Maschine weist verschiedene Steuerungskomponenten beispielsweise mit jeweils zumindest einem Einzelprozessor für die jeweiligen Steuerungsaufgaben auf. Jedem Sektor ist ein Einzelprozessor zugeordnet. Bei den Steuerungsaufgaben ist ein komplexer Programmablauf mit einem komplexen Timing aller Komponenten der IS-Maschine zu berücksichtigen. Der komplexe Programmablauf ist nach dem Stand der Technik durch eine Vielzahl von miteinander verknüpften Rechnereinheiten, beispielsweise mit Einzelprozessoren, gelöst.

Die Verknüpfung erfolgt durch ein Taktsignal. Als Generator des Taktsignals, also als Taktschläger, fungiert in der Regel dabei der Tropfenspeiser. Das Taktsignal wird als Binärmaschinentakt beispielsweise durch eine Spannungsflanke, ansteigende oder fallend, von 0V bis 24V oder von 0V bis 12V, bzw. umgekehrt an Regelung und/oder Steuerung der Sektionen weitergegeben.

Den Stand der Technik kennzeichnen folglich aufwendige und daher kostspielige Mehrprozessorspeziallösungen zum Beherrschen eines Nockensteuerwerks dieser Größenordnung bei einer Glasformungsmaschine. Jede Sektion weist seine eigenen Nockenfunktionen auf. Die Mehrprozessorspeziallösung zur Steuerung bzw. Regelung einer IS-Glasformungmaschine, im folgenden auch nur Glasformungsmaschine genannt, bestehen in der Regel aus einem Hauptprozessor und mehreren autarken Einzelprozessoren mit üblicherweise einem Prozessor pro Sektion, welche über ein maschinenweites binäres Taktsignal, das von der Speiseeinheit, d.h. speziell vom Tropfenspeiser (mit Plunger) generiert wird (ein Takt pro Schnitt), synchronisiert werden. Außer der Taktdatenverbindung sind weitere Busverbindungen vorhanden, die einer Parametrierung, einem Parameteraustausch und Zusatzdatenübertragung dienen.

Eine derartige Mehrprozessorspeziallösung bedeutet eine aufwendige Lösung mit einem externen binären Bit zur schnellen Reaktion auf das Taktsignal des Plungers um Nockenfunktionen der Sektionen auszuführen, bzw. die Nocke für einen Takt von virtuellen 360 Grad, bei einer hier vorliegenden elektronischen Nocke, zu starten.

Aufgabe der Erfindung ist es, den Betrieb und/oder den Aufbau von Glasformungsmaschinen zu verbessern und/oder zu vereinfachen.

Die Lösung der Aufgabe gelingt durch ein Verfahren mit den Merkmalen des Anspruchs 1, bzw. durch eine Einrichtung mit den Merkmalen des Anspruchs 3.

Bei dem erfindungsgemäßen Verfahren zur Regelung und/oder Steuerung einer Glasformungsmaschine, weist dies unterschiedliche Sektionen auf. Die Sektionen weisen Aggregate auf. Eine Sektion ist für die Formung von zumindest einem Glastropfen vorgesehen. Aggregate sind Einrichtungen zur Durchführung der Verformung. Die Aggregate sind so ausgeführt, dass diese Funktionen ausüben, welche über eine Nockenfunktionalität startbar sind. Jede Sektion weist individuelle Nockenfunktionen auf, wobei die Nockenfunktionen gleicher Sektionen auch gleich ausbildbar sind. Ein Aggregat ist beipielsweise eine pneumatische oder auch elektrische Einrichtung zum Schließen und/oder Öffen eines Formteiles zur Ausformung des Glases.

Durch die Verwendung einer zentralen Regelung und/oder Steuerung der Glasformungsmaschine in der Ausprägung einer Individual Section Maschine werden über mindestens ein einheitliches Bussystem Parametrierdaten und/oder Synchronisationsdaten und/oder Bewegungsinformationen und/oder Bewegungsablaufdaten übermittelt. Durch diese Vereinheitlichung werden Aufwand und Kosten reduziert. Als Bussystem wird vorteilhafter weise ein serieller Bus verwendet. Serielle Busse sind z.B. der Profibus oder ein Ethernet basierter Bus. Serielle Busse sind preisgünstig, einfach im Aufbau und wenig störungsanfällig. Unter dem Begriff einheitliches Bussystem ist ein Bussystem gleichen Typs zu verstehen. Auch dies Vereinfacht den Umgang mit der Glasformungsmaschine.

Durch die Verwendung einer zentralen Regelung und/oder Steuerung der Glasformungsmaschine ist eine zentrale Nockensteuerung realisierbar. Durch die zentrale Nockensteuerung ist es möglich alle oder einige Nockenfunktionen welche zeitkritisch hintereinander oder gleichzeitig erfolgen im Vergleich zu Stand der Technik mit wesentlich geringeren Jitter, d.h. wesentlich geringeren Zeitverzügen durchzuführen. Dies gelingt vorteilhaft z.B. durch die Verwendung eines Interpolationstakt der Einrichtung zur Regelung und/oder Steuerung der Glasformungsmaschine.

Durch die zentrale Regelung und/oder Steuerung sind Aggregate, wie Metallstempel zum Eindrücken eines Hohlraums in einen Glastropfen, Schwenkarme zum verschieben eines geformten Glases oder andere Einrichtungen einer Sektion miteinander sehr gut koordinierbar. Dadurch läßt sich die Geschwindigkeit, mit der die Glasformungsmaschine geformtes Glas produziert erhöhen. Durch das zentrale Bussystem ist auch der Aufbau der Datenverbindungen zwischen den verschiedenen Sektionen und/oder Aggregaten der Glasformungsmaschine weniger komplex.

Die zentrale Regelung und/oder Steuerung einer Glasformungsmaschine, z.B. einer Individual Section Glasformungsmaschine, kurz IS-Maschine, umfasst vorteilhaft eine korrekte Zeitansteuerung aller Aggregate durch Start -und Stopbefehle. Start -und Stopbefehle sind Beispiele für Nockenfunktionen. Zur Zeitsteuerung gehören unter anderem die korrekte Regelung und/oder Steuerung der Aggregate wie Tropfenverteiler, Transport-Bänder, Einschieber, Öffner und Schließer für Formen zur Glasformung etc. Die Start- und Stopbefehle werden zentral beispielsweise als großes Nockensteuerwerk mit z.B. über 1200 Nocken bei einer IS-Maschine mit z.B. über zehn Sektionen abgebildet. In einem Maschinenumlauf, d.h. einer gedachten Nockenumdrehung von 360°, werden beispielsweise in ca. 2,4 Sekunden über 1200 Nocken ausgelöst. Von einer gedachten Nockenumdrehung ist deswegen zu sprechen, weil die Nocke in der Software der Einrichtung zur Regelung und/oder Steuerung realisiert ist.

In einer vorteilhaften Ausführung sind bestimmte Nocken eines Nockens auch priorisierbar. Dies bedeutet, dass bestimmte Nocken bestimmter Sektionen priorisiert durch das Busssystem übertragen werden. So ist eine sichere Übertragung zeitkritischer Nocken für wichtige Aggregate realisirbar.

Durch die zentrale Regelung und/oder Steuerung ist die Glasformungsmaschine zentralisiert kontrollierbar. Dies reduziert Kosten gegenüber einen dezentralen Aufbau der Regelung und/oder Steuerung mit Hilfe von unterschiedlichen Steuerungskomponenten mit Einzelprozessoren. Besonders vorteilhaft ist es, wenn über eine zentrale Regelung und/oder Steuerung und über ein oder zumindest zwei Bussysteme zwei Glasformungsmaschinen geregelt und/oder gesteuert werden. So ist eine zweite zusätliche Regelung und/oder Steuerung einsparbar.

Durch die zentrale Regelung und/oder Steuerung ist auch in vorteilhafter Weise ein Binärmaschinentakt einsparbar. Ein Binärmaschinentakt, welcher beispielsweise durch eine ansteigende Flanke von 0V auf 24V realisierbar ist, dient beispielsweise als Startbefehl für die Schere, die dem Tropfenspeiser nachgeordnet ist. Das Signal des Binärmaschinentaktes wird beispielsweise vom Tropfenspeiser über einen Näherungsschalter oder durch eine Servoansteuerung generiert. Die Verteilung und zur Verfügungstellung eines derartigen Taktes erfolgt in einer Ausführungsform der Erfindung über das Bussystem.

Durch die erfindungsgemäßen Verfahren, bzw. durch eine Einrichtung zur Ausführung der Verfahren ist eine zentrale Verwaltung und/oder die Steuerung der gesamten Maschinenstart- und -stopzeitpunkte (Nocken) mit einem zentralen System realisierbar. Durch eine komfortable Vorverarbeitung, sowie einer automatischen Priorisierung erfolgt die dezentralen Nockenausgabe auf Ein- und Ausgängen bzw. z.B. an den Antrieben der Aggregate mit einem einheitlichen Bussystem, wie beispielsweise einem taktsynchronen Bussystem PROFIBUS DP.

Das Bussystem übernimmt in der Glasformmaschine unter anderem die Aufgaben:
a) Übertragung von Parametrierungsinformation
b) Übertragung von Synchronisierungsinformation und
c) Übertragung von Bewegungsinformation und/oder Bewegungsablaufdaten.

Durch die Erfindung lassen sich beispielsweise folgende Vorteile erzielen:
- Kosteneinsparungen durch eine zentrale Lösung für Regelung und/oder Steuerung
- einheitliches Bussystem für alle Datenübertragungsaufgaben, einschließlich der Synchronisierung, ein externe Synchronisierung kann damit entfallen ist jedoch ggf. noch als Taktsignal nutzbar
- Ermöglichung einer einheitlichen Projektierung, Parametrierung und Bedienung, wobei dies jeweils zentral und/oder dezentral durchführbar ist.
- Skalierbarkeit des Systems beim Einsatz von zwei Glasformungsmaschinen im TANDEM-Betrieb, wobei hierbei sowohl eine Regelung und/oder Steuerung für beide Glasformungsmaschinen, als auch zwei Regelungen und/oder Steuerungen jeweils für jeweils eine der Glasformungsmaschinen vorsehbar ist, wobei der Regelung- und/oder Steuerungseinrichtung jeweils eine zentrale CPU zugeordnet ist, welche über das Bussystem datentechnisch miteinander verbunden sind.

Als weitere Vorteile ergeben sich durch:
- ein zentrales Nockenmanagement für die gesamte Glasformungsmaschine
- die Möglichkeit eines zentralen aufbereitens der Nocken über die Software der Regelung und/oder Steuerung (z.B. Sektions- und Winkelbezogen als Matrix 80x3600 (die Spalten entsprechen den Ausgängen, die Zeilen entsprechen z.B. Winkel von 0,1°), Priorisierung etc.)
- das Ersetzen von maschinenspezifischen Speziallösungen, die zur Zeit im Stand der Technik realisiert werden und
- durch das Entfallen einer externen Verdrahtung des Synchronisationssignals, d.h. eines Taktsingales. Die Synchronisation wird über das einheitliches Bussystem vorgenommen.

Weiter vorteilhafte Ausgestaltungen der Erfindung sind in den Unteransprüchen 2,4,6,8 und 9 offenbart.

Ausführungsbeispiele der Erfindung sind in den Abbildungen dargestellt. Dabei zeigen:
- FIG 1: einen symbolhaften Aufbau einer Glasformungsmaschine und
- FIG 2: einen schematischen Aufbau eines einheitlichen Bussystem mit zentraler Steuerung und/oder Regelung.

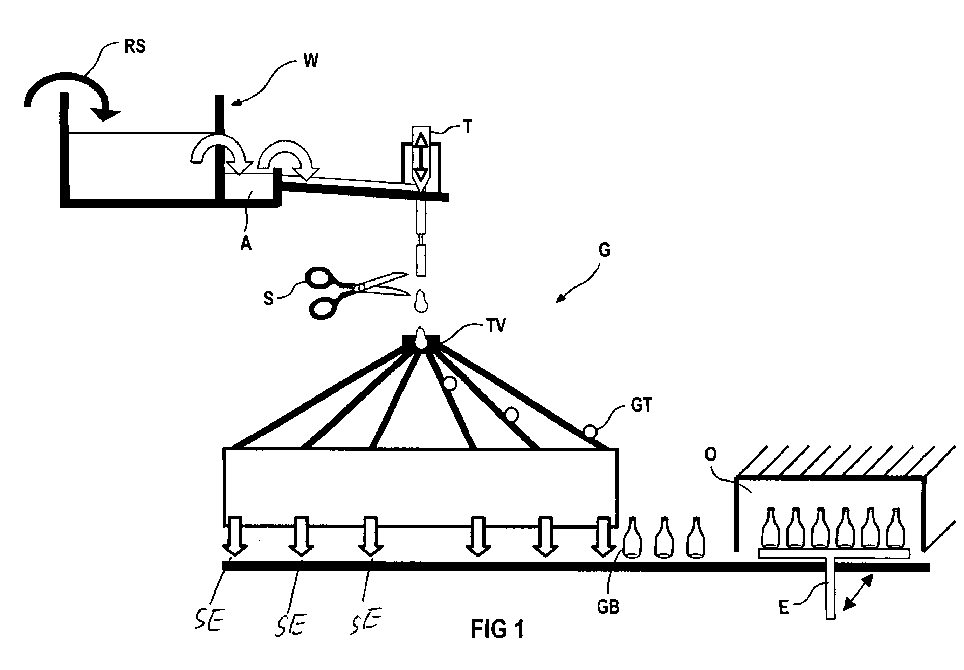

Die Darstellung gemäß Figur 1 zeigt eine Glasformungsmaschine G in der Ausprägung einer Individual Sction Maschine, IS-Maschine. Die Glasformungsmaschine weist eine Speiseeinheit auf, welche einen Tropfenspeiser T, eine Schere S und einen Tropfenverteiler TV aufweist.

Der Tropfenspeiser T ist nach einem Glaswannenofen W, in welchen die Rohstoffe RS, also das Glas gelangen und einer Arbeitswanne A angeordnet. Das flüssige Glas verlässt die Arbeitswanne A über eine beheizte Rinne RI. Die Rinne RI ist dabei in Zonen, welche nicht dargestellt sind, geteilt und temperaturgeregelt. Der Rinne RI schließt sich der Tropfenspeiser T an, in dem das Glas durch einen lochförmigen Abfluss AB abfließt. Der Glasabfluss wird mittels eines frequentiert eintauchenden Stößels ST (Plunger) so eingeschnürt, dass die Tropfengrößen damit bereits vordefiniert sind.

Die Schere S ist verantwortlich für das Durchtrennen des flüssigen Glasstranges, welcher vom Tropfenspeiser T bereits eingeschnürt die Schere S erreicht. Auswechselbare Messer ME mit V- oder C-Schliff schnüren den Glasstrang von allen Seiten gleichzeitig zur Mitte hin ein und durchtrennen diesen vollständig. Dieser Schneidevorgang muss möglichst schnell erfolgen, da das kalte Messer ME in Verbindung mit dem heißen Glas abhängig von der Berührungszeit eine Schnittmarke im Fertigprodukt hinterlässt. Für Anpassungen der Glasschnittmenge und -qualität können verschiedene Bewegungsprofile in einer Regelung und Steuerung hinterlegt sein. Üblich sind bei Behälterglas (0,7 Liter Flaschen) Tropfengewichte im Bereich von ca. 200 Gramm. Die Glasbehältermasse wird mit einer Wiederholgenauigkeit von ±0,5 Gramm bei einem Durchsatz von bis zu 250 Tropfen pro Minute erreicht.

Durch den Tropfenverteiler TV werden die Glastropfen GT in die Vorformen der verschiedenen IS-Maschinensektionen geleitet. Ein Tropfenverteiler TV kann etwa 12 IS-Sektionen mit bis zu 250 Glasschnitten pro Minute (cuts/min) beschicken. Ein "Cut" kann hierbei beispielsweise ein einfach, Zweifach-, Dreifach- oder Vierfachtropfen sein.

Die flüssigen Glastropfen werden vom Tropfenverteiler TV in die Vorformen der IS-Maschine geleitet. Jede Sektion ist für sich unabhängig (individual), daher auch der Name Individual Sections Glasformungsmaschine, und wird einzeln vom Tropfenverteiler TV bedient. Je nach Ausführung wird eine Sektion SE mit bis zu vier Tropfen GT gleichzeitig versorgt.

Das Vorformen wird in der Regel durch einen Metallstempel bewerkstelligt, der das Glas in die Vorform drückt und in der Mitte ein Loch ausbildet (Press-Blas-Verfahren). Der vorgeformte Glaskolben wird anschließend durch ein Schwenkarm in die Endform befördert und mittels Druckluft zum endgültigen Glasbehälter GB geblasen, beispielsweise eine Flasche. Der Vorgang der Verformung bis zur Ausbildung einer Flasche ist in der FIG 1 nicht dargestellt.

Nach dem Öffnen einer Endform schiebt ein Greifer die glühende Flasche GB auf ein Längsband LAE. Die Flaschen werden dabei ggf. noch auf ein nicht dargestelltes Querband umgelenkt, bevor sie dann mit einem Einschieber E Gruppenweise in eine Temperiereinheit O (Kühlofen) geschoben werden.

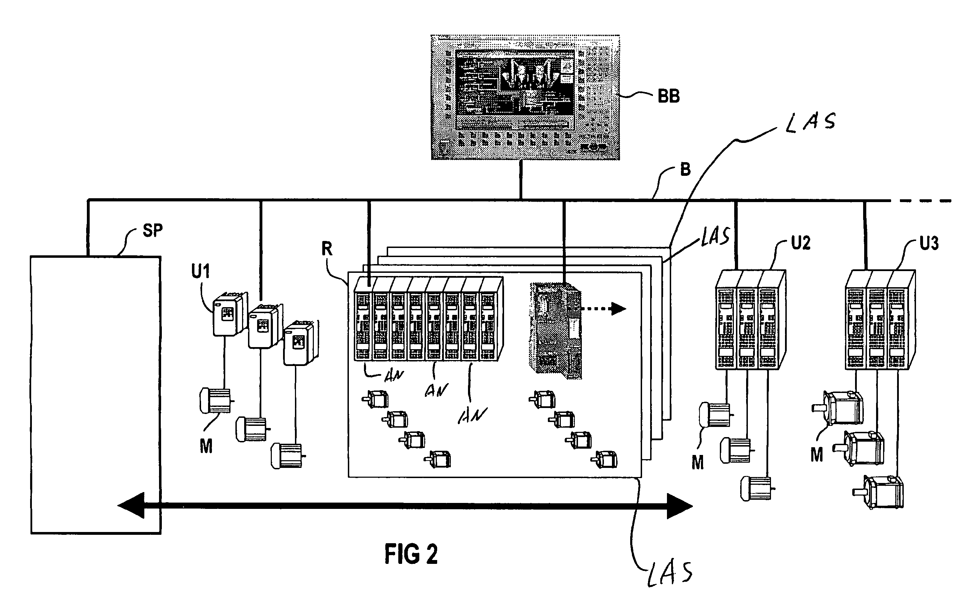

Die Darstellung gemäß FIG 2 zeigt eine Einrichtung zur Steuerung und/oder Regelung der Glasformungsmaschine. Eine Beobachtungs- und Bedieneinheit BB ist über ein Bussystem mit Umrichtern U1, U2, Reglern und/oder Steuerungen R und einer Speiseeinheit SP verbunden. Die Umrichtern U1, U2 speisen die elektrischen Motoren M. Die Motoren sind ein Teil der Speiseeinheit SP, was auch durch einen Pfeil kenntlich gemacht ist.

In der FIG 2 ist die zentrale Regelung und/oder Steuerung in einem oder mehreren Antrieben integriert. Auf der zentralen Regelung und/oder Steuerung R läuft das Nockensteuerwerk ab. Die berechneten Nocken werden über einen Profibus DP auf die Ein- und Ausgänge sowie die Antriebe der Sektionen gegeben. Die dargestellte Konfiguration pro Sektion erfolgt dabei beispielsweise jeweils zehn bis zwölf mal pro Maschine.

Die Umrichter U1 bis U3 übernehmen die Ansteuerung und Drehzahlregelung der Motoren M. Sie werden von der zentralen Steuerung und/oder Regelung R über das einheitliche Bussystem B angesteuert. Über eine Bedien- und Beobachtungseinheit BB lassen sich Parametrierdaten und/oder Synchronisationsdaten und/oder Bewegungsinformation und/oder Bewegungsablaufdaten übermitteln. Als Umrichter U1 bis U3 können beispielsweise Micromaster und Master Drives der Firma SIEMENS verwendet werden.

Die Regelung und/oder Steuerung (R) kann beispielsweise folgende Funktionen der Glasformungsmaschine G übernehmen:
- Drehzahlregelung
- Eil-Schleichgang
- Fahren auf Festanschlag
- Positionieren
- Drehzahl-, Winkelgleichlauf
- Elektrische Getriebefunktion
- Kurvenscheibe
- komplexes, umfangreiches und zentrales Nockenmanagement.

Die Motoren M können beispielsweise als Norm-Asynchronmotoren und Servomaschinen ausgebildet sein. Sie können folgende Komponenten der Glasformungsmaschine G ansteuern:
- Drehrohr
- Drehrohr Höhe
- Lüfter
- Längsband
- Umlenkecke
- Querband
- Einschieber X, Einschiebe Y, Einschieber Z

In der FIG 2 werden die Sektionen durch Laschen LAS repräsentiert.

Die Funktionen der zentralen Regelung und/oder Steuerung der Sektionen lassen sich gemäß FIG 2 auch auf eine oder mehrere Antriebseinheiten AN einer Sektion übertragen. Damit werden von einer Sektion aus andere Sektionen zentral gesteuert und/oder geregelt.

## Patentansprüche

1. Verfahren zur Regelung und/oder Steuerung einer Glasformungsmaschine, welche zumindest ein Bussystem aufweist, **da durch gekennzeichnet, dass** durch eine zentrale Regelung und/oder Steuerung (R) über mindestens ein jeweils einheitliches serielles Bussystem (B):
• Synchronisationsdaten und
• Bewegungsinformation und/oder Bewegungsablaufdaten übermittelt werden, wobei eine Synchronisation eines Tropfenspeisers (T) bzw. eines Tropfenverteilers (TV) über das einheitliche serielle Bussystem (B) vorgenommen wird.

2. Verfahren nach Anspruch 1, **dadurch gekennzeichnet, dass** ein zentrales Nockenmanagement für die Glasformungsmaschine (G) durch die zentrale Regelung und/oder Steuerung (R) vorgenommen wird.

3. Einrichtung zur Regelung und/oder Steuerung einer Glasformungsmaschine, welche zumindest ein Bussystem aufweist, **da durch gekennzeichnet, dass** durch eine zentrale Regelung und/oder Steuerung (R) über mindestens ein jeweils einheitliches serielles Bussystem (B):
• Synchronisationsdaten und
• Bewegungsinformation und/oder Bewegungsablaufdaten übermittelbar sind, wobei eine Synchronisation eines Tropfenspeisers (T) bzw. eines Tropfenverteilers (TV) über das einheitliche serielle Bussystem (B) vornehmbar ist.

4. Einrichtung nach Anspruch 3,
**dadurch gekennzeichnet, dass** ein zentrales Nockenmanagement für die Glasformungsmaschine (G) durch die zentrale Regelung und/oder Steuerung (R) durchführbar ist.

5. Einrichtung nach Anspruch 3 oder 4,
**dadurch gekennzeichnet, dass** die Einrichtung eine Automatisierungskomponente ist, welche eine Regelungs- und/oder Steuerungsfunktionalität aufweist.

## Claims

1. A method for controlling a glass forming machine, which comprises at least one bus system,
**characterised in that**
- synchronisation data and
- motion information and/or motion path information is transmitted by means of a central controller (R) via at least one respective integrated serial bus system (B), with a synchronisation of a globule feeder (T) and/or a globule distributor (TV) being carried out via the integrated serial bus system (B).

2. Method according to claim 1,
**characterised in that**
a central cam management for the glass forming machine (G) is carried out by the central controller (R).

3. Device for controlling a glass forming machine, comprising at least one bus system,
**characterised in that**
- synchronization data and
- motion information and motion path information
is transmitted by a central controller (R) via at least one respective integrated serial bus system (B), with a synchronisation of a globule feeder (T) and/or globule distributor (TV) being able to be carried out over the integrated serial bus system (B).

4. Device according to claim 3,
**characterised in that**
a central cam management for the glass forming machine (G) can be implemented by means of the central controller (R).

5. Device according to claim 3 or 4,
**characterised in that**
the device is an automation component comprising a controller functionality.

## Revendications

1. Procédé pour régler et/ou commander une machine à mouler le verre qui comporte au moins un système de bus, **caractérisé en ce que**
- des données de synchronisation et
- des informations de mouvement et/ou des données sur le déroulement du mouvement
sont transmises par un réglage et/ou une commande centrale (R) par au moins un système de bus (B) en série à chaque fois unitaire, un distributeur de gouttes (T) ou un répartiteur de gouttes (TV) étant synchronisé par le système de bus (B) unitaire en série.

2. Procédé selon la revendication 1, **caractérisé en ce que** le réglage et/ou la commande centrale (R) réalise une gestion centrale à came pour la machine à mouler le verre (G).

3. Dispositif pour régler et/ou commander une machine à mouler le verre qui comporte au moins un système de bus, **caractérisé en ce que**
- des données de synchronisation et
- des informations de mouvement et/ou des données sur le déroulement du mouvement
peuvent être transmises par un réglage et/ou une commande centrale (R) par au moins un système de bus (B) en série à chaque fois homogène, un distributeur de gouttes (T) ou un répartiteur de gouttes (TV) pouvant être synchronisé par le système de bus (B) homogène en série.

4. Dispositif selon la revendication 3, **caractérisé en ce que** le réglage et/ou la commande centrale (R) peut réaliser une gestion centrale à came pour la machine à mouler le verre (G).

5. Dispositif selon la revendication 3 ou 4, **caractérisé en ce que** le dispositif est un composant d'automatisation qui a une fonctionnalité de réglage et/ou de commande.
